# EUROPEAN PATENT SPECIFICATION

(11) **EP 3 466 168 B1**
(45) Date of publication and mention of the grant of the patent: **18.01.2023**
(21) Application number: 16724069.6
(22) Date of filing: 23.05.2016
(51) Int. Cl.: H04W 68/00, H04W 24/02

(54) **COMMUNICATION NETWORK DEVICE, METHOD, COMPUTER PROGRAM PRODUCT AND COMPUTER-READABLE MEDIUM FOR EXECUTING PAGING TO A USER COMMUNICATION DEVICE**
KOMMUNIKATIONSNETZVORRICHTUNG, VERFAHREN, COMPUTERPROGRAMMPRODUKT UND COMPUTERLESBARES SPEICHERMEDIUM ZUR AUSFÜHRUNG VON FUNKRUFEN AN EINE BENUTZERKOMMUNIKATIONSVORRICHTUNG
DISPOSITIF DE RÉSEAU DE COMMUNICATION, PRODUIT-PROGRAMME INFORMATIQUE, SUPPORT DE STOCKAGE LISIBLE PAR ORDINATEUR
ET PROCÉDÉ D'EXÉCUTION DE RADIOMESSAGERIE VERS UN DISPOSITIF DE COMMUNICATION D'UTILISATEUR

(43) Date of publication of application: 10.04.2019
(73) Proprietor: Sony Group Corporation, Tokyo 108-0075 (JP)
(72) Inventor: NORD, Lars, 223 59 Lund (SE); BERGGREN, Anders, 226 49 Lund (SE)
(74) Representative: Neusser, Sebastian
(86) International application number: PCT/EP2016/061564
(87) International publication number: WO 2017/202443

(56) References cited:
- WO-A1-2008/100681
- WO-A2-2009/091743
- WO-A2-2014/027265
- WO-A2-2016/075472
- CASTELLUCIA C ET AL: "AN ADAPTIVE PER-HOST IP PAGING ARCHITECTURE", COMPUTER COMMUNICATION REVIEW, ACM, NEW YORK, NY, US, vol. 31, no. 5, 1 October 2001 (2001-10-01), pages 48-56, XP001115325, ISSN: 0146-4833, DOI: 10.1145/1037107.1037114
- VODAFONE GROUP PLC: "Mobility Management Concept: implications on Paging Channel capacity; System Information content; and interface with Core Network", 3GPP DRAFT; GP-140924, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 17 November 2014 (2014-11-17), XP050874978, Retrieved from the Internet: URL:http://www.3gpp.org/ftp/Meetings_3GPP_ SYNC/GERAN/Docs/ [retrieved on 2014-11-17]

## Description

### TECHNICAL FIELD

Present invention relates to a communication network device and to a method, both configured to execute paging to a user communication device in a communication network. Additionally, the present invention relates to a corresponding computer program product and to a corresponding computer-readable recording medium.

### BACKGROUND

Paging is used often in communication networks for activating a user communication device. For example, a user communication device can be in a lightly connected mode, dormant mode, idle mode, sleep mode, hibernating mode, a standby mode, or any other power saving mode. Its activating is executed by transmitting a paging message to the user communication device, i.e. by performing paging to the user communication device. However, because the user communication device is in a lightly connected mode, dormant mode, idle mode, sleep mode, hibernating mode, a standby mode, or any other power saving mode before its activation, its location in the communication cell is not known. The communication network comprises a plurality of cells. Thus, also the cell is not known, in which the user communication device is located and/or via which the user communication device is reachable, i.e. via which data and/or signal transmission to the user communication device can be executed. To locate the cell, via which the user device is reachable, complex and time-consuming signalling processes or operations have to be executed according to current techniques, such as implemented in the long term evolution (LTE) network, for example.

Thus, an improved approach for activating a user communication device, i.e. for executing paging to the user communication device is desired. Preferably, it is desired to reduce the complexity and to increase the efficiency of the paging to the user communication device.

The document by CASTELLUCIA C ET AL: "AN ADAPTIVE PER-HOST IP PAGING ARCHITECTURE"; COMPUTER COMMUNICATION REVIEW, ACM; NEW YORK, NY, US; vol. 31, no. 5; 1 October 2001 (2001-10-01); pages 48-56; ISSN: 0146-4833, discloses a scheme for the adaptive (dynamic) determination of the paging areas for wireless mobile terminals, in order to increase the efficiency and performance of the associated paging system.

### SUMMARY

The present invention enables an improved approach for activating a user communication device, i.e. for executing paging to the user communication device as desired. The general idea of the present invention is to use information on neighbour cells of the user communication device before its switching to a lightly connected mode, dormant mode, idle mode, sleep mode, hibernating mode, a standby mode, or any other power saving mode. When choosing appropriate neighbour cells for paging, the success of paging can be increased. Additionally, also further criteria or parameters can be used for selecting cells, in which paging could be successful. Such further criteria or parameters are associated, for example, with the behaviour of the user communication device in the communication network and/or with the type of the user communication device. The knowledge on the behaviour and/or the type of the user communication device improves the result of the prediction of cells that could lead to a successful paging.

The present invention is defined by the appended claims.

### BRIEF DESCRIPTION OF THE DRAWINGS

In the following, embodiments of the present invention are described with reference to accompanying drawings in which the same or similar reference numerals designate the same or similar elements.
FIG. 1 shows a communication network with a plurality of cells, in which paging to a user communication device is executed according to an embodiment of the present invention.
FIG. 2 shows a communication network device arranged to executed paging (i.e., sending of paging messages) to user communication device according to an embodiment of the present invention.
FIG. 3 shows a flowchart of steps executed for performing paging according to an embodiment of the present invention.
FIG. 4a shows a flowchart of steps executed to determine communication network cell group for executing paging to user communication device according to an embodiment of the present invention.
FIG. 4b shows a flowchart of steps executed to determine communication network cell group for executing paging to user communication device according to an embodiment of the present invention.
FIG. 5a shows a flowchart of steps executed with regard to a paging to a user communication device according to an embodiment of the present invention when the communication network is based on architecture of LTE network.
FIG. 5b shows a flowchart of steps executed with regard to a paging to a user communication device according to the embodiment of the present invention when the communication network is based on architecture of LTE network.
FIG. 6 shows a flowchart of steps executed with regard to a paging to a user communication device according to the embodiment of the present invention when the communication network is based on architecture of LTE network.

### DETAILED DESCRIPTION OF EMBODIMENTS

In the following, exemplary embodiments of the present invention are described with reference to the attached drawings. Features of the various embodiments may be combined with each other unless specifically stated otherwise.

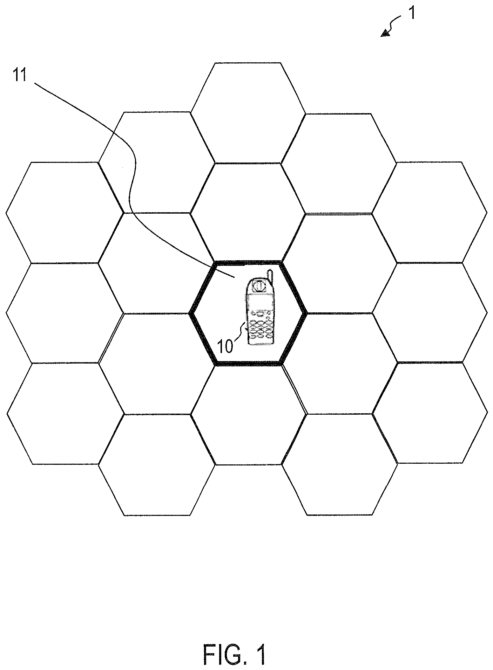

FIG. 1 shows a communication network 1 with a plurality of cells (see the hexagons of FIG. 1), in which paging to a user communication device 10 is executed according to an embodiment of the present invention. User communication device 10 can be any device that is capable to communicate with other devices via communication network 1, i.e. transmit/sent and/or receive data and/or signals via communication network 1. User communication device 10 can be mobile or stationary device.

The communication is executed wirelessly, i.e. communication network 1 is a wireless cellular communication network. The communication is executed by use of at least one communication protocol. Communication network 1 is according to an embodiment a long-term evolution network (LTE) or a communication network that is based on architecture of the LTE. The architecture of the LTE is referred to also as evolved packet system (EPS). The present invention is, however, not limited to LTE or LTE based communication networks. The present invention can be implemented also in further communication networks comprising cells or cellular networks respectively.

If user communication device 10 is not in a lightly connected mode, dormant mode, idle mode, sleep mode, hibernating mode, a standby mode or any other power saving mode, it is in an active mode, e.g., a connected mode. In the active or connected mode, user communication device 10 is capable of establishing communication with further communication devices (e.g., further user communication devices), communicating over communication network 1, and of communicating with the further communication devices. In the active, e.g., connected mode, location of user communication device 10 is known. Thus, also cell 11 of communication network 1, in which user communication device 10 is located, is also known. As soon as user communication device 10 switches to a lightly connected mode, dormant mode, idle mode, sleep mode, hibernating mode, a standby mode, and/or any other power saving mode, its location is not necessarily known. If user communication device 10 is in a lightly connected mode, dormant mode, idle mode, sleep mode, hibernating mode, a standby mode, and/or any other power saving mode, user communication device 10 may switch to the active, e.g., connected mode for transmitting data and/or signals. However, the data and/or signals that are transmitted to user communication device 10 are often collected or hold back until user communication device 10 switches to the active, e.g., connected mode. In LTE network, for example, data and/or signals to be transmitted to user communication device 10 are collected in the serving gateway (S-GW) until the activation of user communication device 10. In case of presence of data and/or signals to be transmitted to user communication device 10, i.e. in case of presence of downlink data for user device 10, activation of user communication device 10 is initiated, for example, by a paging functionality. In the paging procedure, a message referred to as paging message is transmitted from a communication network device to user communication device 10 to initiate activation of user communication device 10 for data and/or signal and, particularly, for downlink data reception. In response to the reception of the paging message, user communication device 10 switches to the active, e.g., connected mode for receiving said data and/or signals.

In FIG. 1, the last cell of the communication network 1, in which user communication device 10 was active before switching to a lightly connected mode, dormant mode, idle mode, sleep mode, hibernating mode, a standby mode, and/or any other power saving mode is cell 11, highlighted by bold lines. After the activation of user communication device 10, it is not ensured that last cell 11, in which user communication device 10 was most recently located during the previous active modus and/or via which user communication device 10 was most recently reachable, will be again the cell in which user communication device 10 is currently located. During the inactive mode (e.g., lightly connected mode, dormant mode, idle mode, sleep mode, hibernating mode, a standby mode, and/or any other power saving mode), user communication device 10 may have moved to another cell. Because, the activation of user communication device 10 requires a transmission of the paging message to user communication device 10 by a communication network device, the area of communication network 1, in which user communication device 10 will be located at the time of the transmission of the paging message should be known or has to be detected.

As mentioned, the communication network, in which the present invention can be implemented, may be LTE or LTE based network, for example.

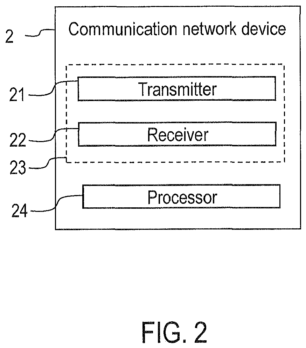

FIG. 2 shows a communication network device 2 arranged to executed paging (i.e., sending of paging messages) to user communication device 10 according to an embodiment of the present invention. According to an embodiment, communication network device 2 is a base station (BS) or an evolved node B (eNodeB or eNB respectively). According to an embodiment, communication network device 2 is located in (at least) one particular cell of communication network 1. According to an embodiment, communication network device 2 is configured to serve at least one cell of communication network 1. Thus, communication network device 2 can serve also a plurality of or multiple cells, e.g., at least two cells. The serving refers, for example, to management, organization and execution of data and/or signal transmissions in the at least one cell.

According to the embodiment of FIG. 2, communication network device 2 comprises a transmitter 21 that is configured to transmit or send data and/or signals in communication network 1. Thus, according to the present embodiment, communication network device 2 transmits data and/or signals also to user communication device 10 by use of or via transmitter 21. Further, communication network device 2 comprises a receiver 22 that is configured to receive data and/or signals in communication network 1. Thus, according to the present embodiment, communication network device 2 receives data and/or signals also from user communication device 10 by use of or via receiver 22. Transmitter 21 and receiver 22 may be incorporated in one unit 23. Unit 23 executing data and/or signal transmissions and/or receptions can be, for example, a transceiver or a modem.

Further, according to the embodiment, communication network device 2 comprises a processor 24 that is configured to execute steps or operations of communication network device 2. Particularly, processor 24 is configured to execute steps and operations described herein, apart from transmissions and/or receptions executed by corresponding components 21 to 23, as described above.

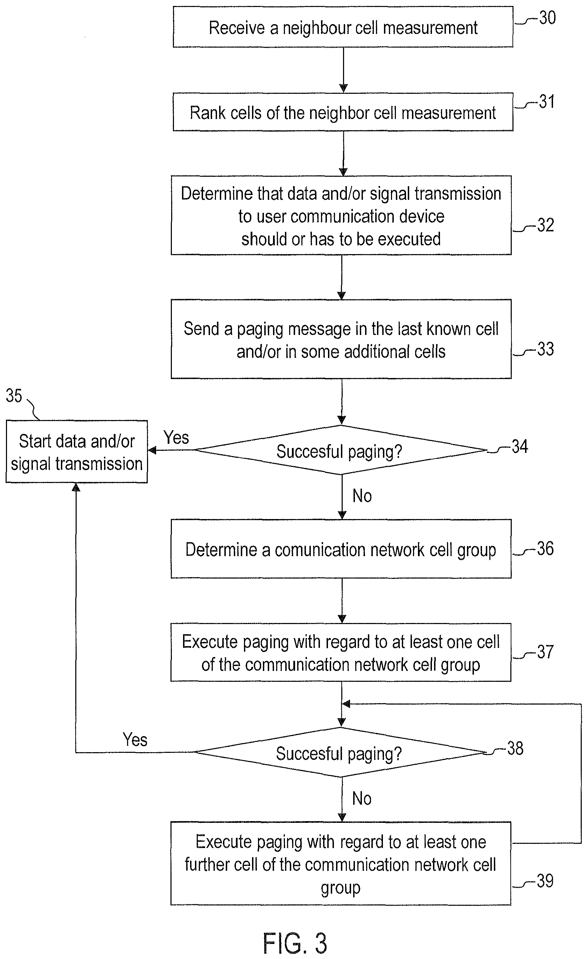

FIG. 3 shows a flowchart of steps executed for performing paging according to an embodiment of the present invention. The steps of FIG. 3 are executed (essentially) by communication network device 2.

In step 30, a neighbour cell measurement is received by communication network device 2.

The neighbour cell measurement is a measurement executed with regard to one or more neighbour cells of user communication device 10. According to an embodiment of the present invention, the neighbour cell measurement is provided or transmitted to communication network device 2 by user communication device 10 in its active or connected mode or state. According to an embodiment, neighbour cell measurements are executed by user communication device 10 in its active or connected mode or state. In an embodiment, user communication device 10 (if active) reports a measurement, executed with regard to its neighbour cells, on a regular basis, i.e. regularly (e.g. periodically or at predetermined times). For example, in an embodiment, user communication device 10 transmits a neighbour cell measurement every 200 ms to communication network device 10.

The neighbour cell measurement is specific or unique for user communication device 10 and depends on actual or current radio environment of user communication device 10 at the time, at which the measurement has been executed. Thus, the neighbour cell measurement comprises information on neighbour cells of current cell 11, in which user communication device 10 is currently (i.e. at the time of the execution of the measurement) located. This information, i.e. the neighbour cell measurement comprises, according to an embodiment, for each (relevant) neighbour cell, a measurement (i.e. a value) of signal strength of signals of user communication device 10 in the respective neighbour cell and/or a measured signal quality of signals of user communication device 10 in the respective neighbour cell. According to an embodiment, the neighbour cell measurement comprises at least one of the following two parameters with regard to each (relevant) neighbour cell: reference signal received power (RSRP), and reference signal received quality (RSRQ). Both RSRP and RSRQ are parameters that are measured, for example, in LTE network and that are, thus, known to the skilled person. It has to be noted that the present invention is not restricted to RSRP and RSRQ only, also further parameters may be measured and inserted in the neighbour cell measurement for further consideration.

According to the present embodiment, in step 31, a ranking of cells of the neighbour cell measurement is executed. The ranking 31 of cells is executed in view of values/parameters measured with regard to the respective cells. If the neighbour cell measurement comprises, for each neighbour cell of the neighbour cell measurement, signal strength and/or a signal quality as measured parameters or values, the ranking 31 is executed with regard to the respective signal strengths and/or a signal qualities.

The ranking 31 is executed such that neighbour cells with higher a signal strength and/or with a higher signal quality receive a higher ranking. If more than one parameter is used for ranking 31 cells (e.g., if both signal strength and a signal quality are taken into consideration), the ranking parameters themselves (e.g., signal strength and a signal quality) may be ranked 31 such that first, main or primary ranking of cells is executed with regard to parameter having the higher ranking, and the further ranking(s) 31 of cells are executed with regard to further parameter(s) having next lower ranking.

As mentioned, if user communication device 10 is not active, e.g., is not in a connected mode or state respectively, data and/or signals to be transmitted to the user communication device 1 are collected for transmission to user communication device 10. The following steps are executed if user communication device 10 is not active, e.g., is not in an active or connected mode or state, and if data and/or signals, particularly, downlink data to be transmitted to user communication device 10 is/are present.

In step 32, communication network device 2 determines that data and/or signal transmission to user communication device 10 should be or has to be executed. This determining 32 can be executed in view of a present schedule specifying time periods to be used for transmission of paging messages and/or in view of presence of data and/or signals to be transmitted to user communication device 10.

In step 33, communication network device 2 sends a paging message to user communication device 10. According to the present embodiment, the paging message is sent or transmitted 33 at first in last known cell 11 of user communication device 10 and/or in some (at least one) additional cells, with regard to which it is assumed or expected to reach user communication device 10.

If the paging to user communication device 10, executed in step 33, was successful 34, e.g., if user communication device 10 responds communication network device 2 to indicate the reception of the paging message, transmission of data and/or signals to user communication device 10 can be started 35. According to an embodiment the data and/or signals are transmitted 35 to user communication device 10 by and/or via communication network device 2.

If the paging 33 was not successful 34, e.g., if communication network device 2 does not receive from user communication device 10 a response indicate the reception of the paging message by user communication device 10, a communication network cell group is determined 36, in which the presence and/or the reachability of user communication device 10 is expected.

The determining 36 of the communication network cell group can be referred to also as determining 36 of a paging area, wherein the paging area comprises the group of communication network cells, if which the reachability of user communication device 10 is expected or assumed. I.e., it is expected or assumed with a certain probability, that user communication device 10 can receive data and/or signals and thus also paging messages in at least one of the cells of said group or paging area respectively.

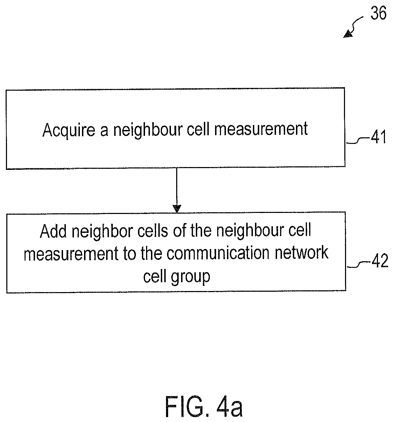

FIG. 4a shows a flowchart of steps executed to determine 36 the communication network cell group for executing paging to user communication device 10 according to an embodiment. Said steps are executed (essentially) by communication network device 2. As explained above, the steps are executed if user communication device 10 is not active, e.g., is not in an active or connected mode or state, and if data and/or signals, particularly, downlink data to be transmitted to user communication device 10 is/are present.

In step 41, a neighbour cell measurement is acquired. When communication network device 2 acquires the neighbour cell measurement, the last neighbour cell measurement received 30 by communication network device 2 is acquired. According to an embodiment, communication network device 2 ranks 31 cells of a received neighbour cell measurement and stores the ranked neighbour cell measurement. In step 41, communication network device 2 acquires, from the storage, the neighbour cell measurement that has been received 30 most recently or lastly. According to an embodiment, the cells of the last neighbour measurement are ranked 31, as described above. Thus, communication network device 2 determines 36 the communication network cell group based on last and most current information on user communication device 10 and, in particular, based on last and most current information on location of user communication device 10 in communication network 1.

In step 42, the communication network cell group is initialized, i.e. the communication network cell group is initially empty. The neighbour cell measurement, as acquired in step 41, is used to add neighbour cells to the group. In particular, neighbour cells comprised in the neighbour cell measurement are added to the communication network cell group or paging area respectively in step 42. Step 42 is executed by communication network device 2. If ranking 31 has been executed with regard to the cells of the neighbour cell measurement, said cells are present in the communication network cell group according to their ranking. I.e. a communication network cell group with ranked cells is present.

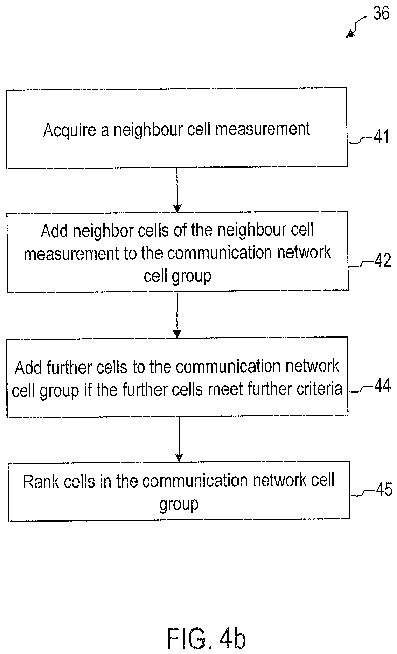

FIG. 4b shows a flowchart of steps executed to determine 34 the communication network cell group for executing paging to user communication device 10 according to a further embodiment. Said steps are executed (essentially) by communication network device 2. As explained above, the steps are executed if user communication device 10 is not active, e.g., is not in an active or connected mode or state, and if data and/or signals, particularly, downlink data to be transmitted to user communication device 10 is/are present.

Embodiment of FIG. 4b distinguishes from the embodiment of FIG. 4a that also further parameters or criteria are used for determining the communication network cell group or paging area respectively. According to the embodiment of FIG: 4b, the determining 34 of the communication network cell group for executing paging to user communication device 10 also comprises steps 41, 42 as described above.

In step 44, further criteria and/or parameters are taken into consideration for adding cells to the communication network cell group or paging area respectively. Further parameters and/or criteria comprise, for example, validity time, mobility of user communication device 10, type of user communication device 10, historical paging success, and/or mobility history of user communication device 10 in communication network 1.

According to an embodiment, types of user communication device 10 specify whether user communication device 10 is a stationary or non-stationary device. In case of a stationary user communication device 10, cells that are closely located to the last cell 11 (e.g., cell that was the current location of user communication cell 10 at the time of execution of the neighbour cell measurement and/or cell via which user communication device was most recently reachable) are additionally added to the communication network cell group. In case of a non-stationary user communication device 10, cells that are not closely but further away located to the last cell 11 are additionally added to the communication network cell group. Here, for example, a threshold for a minimum and/or maximum distance from the last cell 11 can be used to determine cells to be added.

According to an embodiment, if user communication device 10 is a stationary device, cells that are close to last cell 11 are added to the communication network cell group. According to an embodiment, it is determined whether a distance between a cell and last cell 11 is smaller than a predetermined maximum distance threshold. If so, the cell is added to the communication network cell group.

According to an embodiment, if user communication device is a non-stationary device, it is determined whether a distance to last cell 11 is larger than a predetermined minimum distance threshold. If so, the cell is added to the communication network group.

According to an embodiment, historical paging success is taken into consideration. Here, a previously executed paging event history is considered. Then, to the communication network cell group, also such cells are added, in which at least one paging event or a predetermined number of paging events succeeded.

According to an embodiment, mobility history of user communication device 10 in communication network 1 is taken into consideration. Here, cells, in which user communication device 10 is expected according to a history of mobility of user communication device 10, are added to the communication network cell group. For example, if user communication device 10 was often (e.g., at least a predetermined number of times) in a particular cell and/or if user communication device 10 had often (e.g., at least a predetermined number of times) handovers to a particular cell, the particular cell will be added to the communication network cell group.

According to an embodiment, mobility of user communication device 10 is taken into consideration. Here, by use of a history of previous location of user communication device 10 and/or by use of last cell 11, direction and/or speed of movement of user communication device 10 in communication network 1 are determined. By use of this data, approximate location of user communication device 10 is determined, and corresponding cells that are covered by the approximate location are added to the communication network cell group. Thus, a tracking of the movement of user communication device 10 is executed for determining an approximate or expected location of user communication device 10 and for adding corresponding cells to the communication network cell group. According to the mobility criteria, if user communication device 10 has a low mobility and basically is moving between few cells, the number of potential cells, in which paging could be successful, is smaller in comparison to a user communication device with a higher or high mobility.

According to another embodiments, also cells of a cell cluster and/or of a tracking area (as defined, for example, in LTE standards) can be added to the communication network cell group. Also here, for example, the above-mentioned criteria can be applied. Instead of inserting a single cell, a plurality of cells (e.g., cells of a cluster and/or cells of a tracking area) are inserted. Here, a cell cluster is a cluster or group of communication network cells. According to an embodiment, a cell cluster is located within a tracking area, i.e. comprises cells that are comprised in the tracking area. Thus, a cell cluster represents a number of cells that is smaller than a number of cells of a tracking area, i.e. a cell cluster is smaller than a tracking area. As mentioned, according to an embodiment a cell cluster is a part of a tracking area.

According to an embodiment, a validity timer is used, wherein the validity timer indicates how old neighbour cell measurements are. Thus, cells of older neighbour cell measurements will receive a lower ranking and/or a lower probability for being suitable for paging than cells of younger neighbour cell measurements. Here, different (e.g. at least one) thresholds can be used for differentiating the measurement times. Thus, measurements executed at a time that is within a particular time range and the cells of said measurements will receive a corresponding ranging and/or probability associated with the particular time range.

The embodiments mentioned above with regard to step 44 can be combined with each other in various ways.

In step 45, a ranking of cells of the communication network cell group is executed (see also step 31 f FIG. 3). Ranking 45 is executed in view of the above-described parameters and/or criteria. Further, ranking 45 is executed in similar way as described above with regard to step 31 of the embodiment of FIG. 3.

After the execution of step 36, i.e. after the determining of the communication network cell group, paging is executed in step 37 with regard to at least one cell of the communication network cell group. If a ranking 31, 45 of cells has been executed in the communication network cell group, paging message is sent 37 to at least one cell having the highest ranking. The ranking result may lead to more than one cell having the same ranking value. According to an embodiment, paging 37 can be done to a sub-group of cells having the highest ranking in the communication network cell group. According to an embodiment, a sub-group of cells comprises cells, ranking of which is located within a predetermined range.

If paging 37 succeeds 38, data and/or signal transmission is started 35.

However, if paging 37 was not successful 38, step 39 is executed, in which paging is executed with regard to at least one further cell of the communication network cell group. If a ranking 31, 45 of cells has been executed in the communication network cell group, paging message is sent 39 to at least one cell having the next lowest ranking. According to an embodiment, also paging 39 can be done to a sub-group of cells having the next lowest ranking in the communication network cell group. As mentioned, according to an embodiment, a sub-group of cells comprises cells, ranking of which is located within a predetermined range.

In case, paging 39 was not successful 38, i.e. failed in all cells of the communication network cell group and no further cell is left in the group for executing step 39, the communication network cell group can be expanded by executing step 44, explained already above. In this case, further criteria and/or parameters can be used to add further cells to the communication network cell group. If desired, ranking 45 of the further cells added to the communication network cell group can be executed. Subsequently, the procedure is continued at step 37 with regard to the further added cells in the communication network cell group.

If no further adding of cells to the communication network cell group is desired or possible, according to an embodiment, the paging can be continued by applying one of known paging approaches, e.g. by executing conventional paging of the LTE network. According to another embodiment, the communication network device 2 contacts a further communication network device and requests the further communication network device to execute paging as explained above.

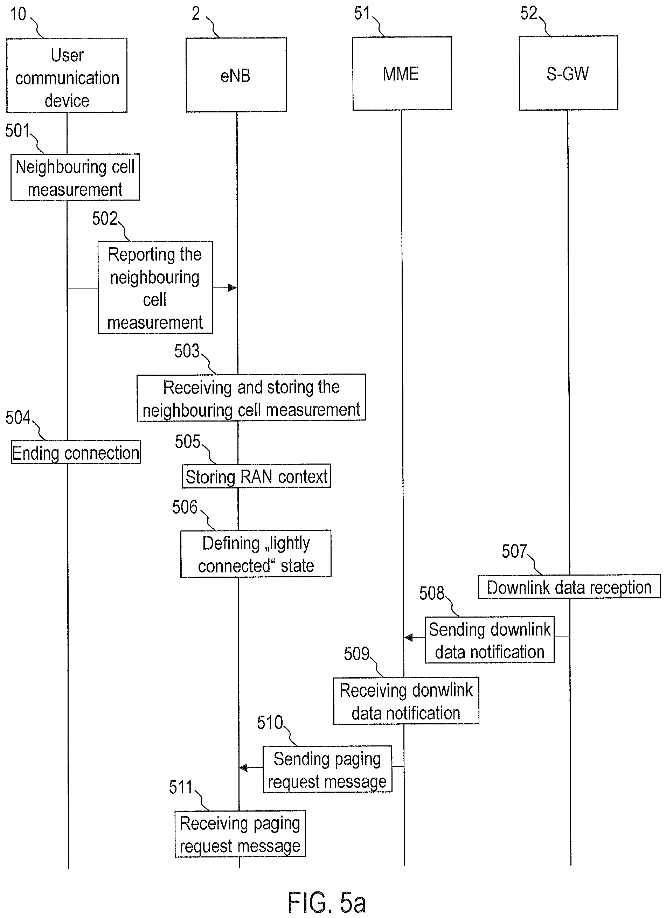

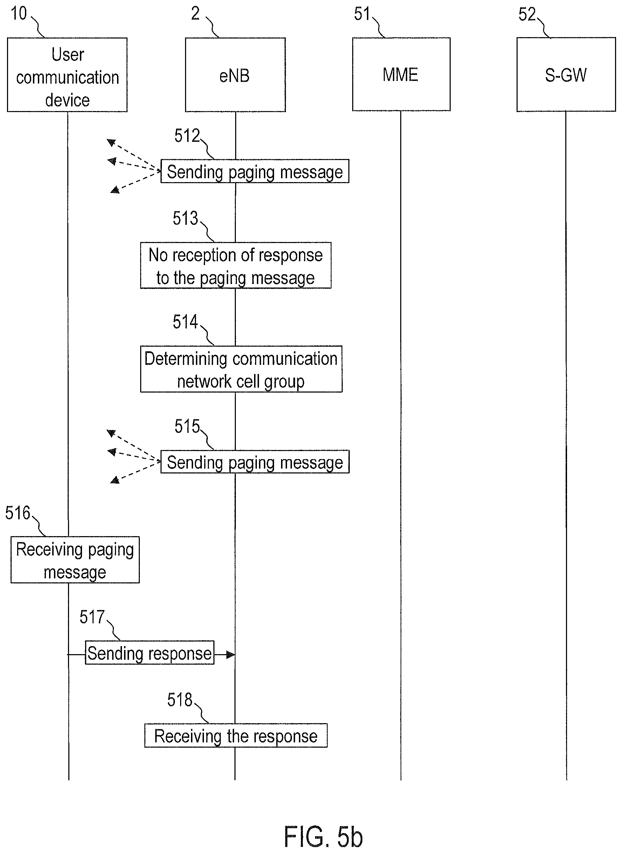

FIGs. 5a and 5b show flowcharts of steps executed with regard to a paging to a user communication device 10 according to an embodiment of the present invention when communication network 1 is based on architecture of LTE network.

FIG. 5 shows exemplary architecture of LTE network, based on which paging to user communication device 10 is executed according to an embodiment of the present invention. It is assumed, that the architecture of LTE network, i.e. the evolved packet system (EPS) is known and that no further explanation of the corresponding components is necessary. According to the present embodiment the communication network device 2 is an eNB, and the user communication device 10 is a user equipment (UE) that is connected to the communication network 1 or LTE respectively.

In step 501, user communication device 10 is in an active or connected mode (e.g., RRC_CONNECTED state) and executes a neighbouring cell measurement. In step 502, user communication device 10 is still in an active or connected mode and reports the neighbouring cell measurement to eNB 2. The neighbouring cell measurement can be reported, for example, for a potential handover. In step 503, eNB 2 receives and stores the neighbouring cell measurement reported by user communication device 10. As mentioned above, according to an embodiment, eNB 2 also ranks 31 the cells of the neighbouring cell measurement before the storage such that a neighbouring cell measurement with ranked cells is stored.

In step 504, user communication device 10 ends the connection, and the connection is suspended. In response to the suspended connection, in step 505, eNB 2 stores the radio access network (RAN) context of user communication device 10. By use of the stored RAN context, eNB is enabled to resume the connection with user communication device 10 faster.

In step 506, eNB 2 defines the mode or state of user communication device 2, according to the present embodiment, to "lightly connected" mode or state, as used in LTE. Here, it has to be noted that the present invention is not limited to the "lightly connected" mode or state. Also further modes like dormant mode, idle mode, sleep mode, hibernating mode, a standby mode or any other power saving mode are possible and can be used alternatively.

After the defining of the "lightly connected" mode or state, user communication device 10 performs normal idle mode task in the "lightly connected" state.

In step 507, downlink data is received in Serving Gateway (S-GW) 52. In response to this, S-GW 52 sends a downlink data notification to mobility management entity (MME) 51 in step 508. MME 51 receives the downlink data notification in step 509.

In response to the reception 509 of the downlink data notification, MME 51 sends in step 510 a paging request message to the eNB 2. The paging request message comprises information on last cell 11 of user communication device 10, i.e. on the cell in which user communication device 10 was located before the suspension of the connection in step 504. According to an embodiment, the information on last cell 11 comprises the ID, i.e. identification of said last cell 11 in communication network 1.

In step 511, eNB 2 receives the paging request message. The reception 511 of the paging request message corresponds generally to the above described step 32. In response to the reception 511 of the paging request message, eNB 2 starts the execution of the paging as described above. Thus, in step 512, eNB 2 sends a paging message to last known cell 11 or to some additional cells as described above with regard to step 33.

If user communication device 10 does not respond to the paging message, as indicated by step 513, the paging attempt was not successful (see the NO-branch from step 34 to step 35 in FIG. 3), eNB 2 starts escalation of cells of communication network 1 to a larger number of cells for executing the paging in step 514. Thus, in step 514, eNB 2 determines a communication network cell group or paging area respectively as described above with regard to step 36. According to an embodiment, the communication network cell group comprises IDs, i.e. identifications of the respective cells of communication network 1.

After the determination 514 of the communication network cell group or paging area respectively, eNB 2 sends a paging message in step 515 as described above with regard to steps 37, 38, and 39 of FIG. 3.

According to the present embodiment, user communication device 10 receives one of the paging messages transmitted in step 516. In response to the reception 516 of the paging message, user communication device 10 switches to an active or connected mode. In the active or connected mode, user communication device 10 is capable or receiving the downlink data stored temporarily until the activation of user communication device 10 in S-GW 52. Also further data and/or signals can be received in the active or connected mode by user communication device 10.

In response to the reception 516 of the paging message, user communication device 10 transmits in step 517 a corresponding response. In step 518, eNB 2 receives the response from user communication device 10. As mentioned above, the reception 518 of the response from user communication device 10 indicates eNB 2 that the paging was successful and that data and/or signal transmission to user communication device 10 can be started (see also the above description of steps 38 and 35 of FIG. 3).

If the cell, in which the paging message has been received is served by a further eNB of communication network 1, eNB transfers the RAN context as stored in step 505 to the further eNB of communication network 1. According to an embodiment, in view of the use of the LTE architecture, the transmission is executed via the X2 interface, which is generally known as an interface for communication between two eNBs in the architecture of the LTE network.

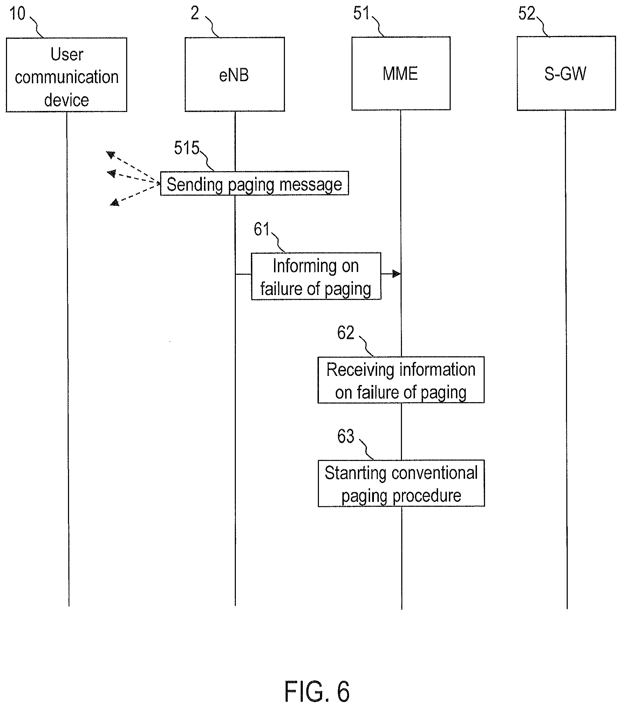

FIG. 6 shows a flowchart of steps executed with regard to the paging to user communication device 10 according to the embodiment of the present invention when communication network 1 is based on architecture of LTE network. In particular, steps of FIG. 6 are executed, if sending 515 of the paging message to the cells of the determined communication network cell group fails, i.e. if in none of the cells of the determined communication network cell group receives the paging message. Thus, the steps of FIG. 6 follow the step 515 of FIG. 5b.

If the paging to the cells of the determined communication network cell group fails, eNB 2 informs MME 51 that the paging failed in step 61. According to an embodiment, this informing 61 of MME 51 represents a response to the paging request message of MME 51 transmitted in step 510 by MME 51 to eNB 2. According to an embodiment, the response 61 is explicit, i.e. is transmitted with a corresponding response message. According to another embodiment, the response 61 is implicit, for example in view of a timer that was set with regard to the execution of the paging and that expires. After the expiry of the timer, MME 51 is informed 61 that the paging filed. In step 62, MME 51 receives (implicitly or explicitly) the information that the paging failed.

In response to the reception 62 of the information on the failure of the paging, paging as conventionally executed in LTE network is started by MME 51 in step 63.

In LTE network, cells are grouped in tracking areas. According to the conventional LTE paging, at first, a paging message is transmitted to the tracking area, in which last cell 11 is located. For this purpose, MME 51 transmits a paging message to all eNBs of the tracking area, and the corresponding eNBs transmit the paging message to the cells which the eNBs serve. If the paging fails, MME 51 executes the paging also with regard to further tracking areas of communication network 1. Thus, MME 51 transmits a paging message to all eNBs of the corresponding tracking areas, and the eNBs of said tracking areas transmit the paging message to the cells served by the eNBs.

It has to be noted that the above described embodiments can be combined with each other, unless the combination has been explicitly excluded. Further, rather generally disclosed steps can be combined with more specific steps of FIGs. 5a, 5b, and 6. Different abstraction levels supplement each other.

Additionally, it has to be noted that, although embodiments of FIGs. 5a, 5b, and 6 have been described with regard to the architecture of LTE network, this teaching represents one more concrete way of implementation. The principles and steps of FIGs. 5a, 5b, and 6 are correspondingly transferable also to further networks using paging for activating a user communication device 10. Said activating is executed, for example, for communicating with user communication device 10, e.g. for transmitting data and/or signals to user communication device 10.

Thus, the present invention relates to a communication network device and to a method, both configured to determine a communication network cell group in a communication network for executing paging to a user communication device, wherein the communication network cell group is determined by use of a neighbour cell measurement provided by the user communication device. The present invention relates also to a correspondingly arranged computer program product and to a correspondingly arranged computer-readable recording medium.

The present invention is limited only by the appended claims.

## Claims

1. A communication network device, wherein the communication network device is configured to determine a communication network cell group in a communication network for executing paging to a user communication device in a dormant state, wherein the communication network cell group is determined by use of a neighbour cell measurement provided by the user communication device in an active state.

2. The communication network device according to claim 1, wherein the use of at least one neighbour cell measurement comprises adding, to the communication network cell group, neighbour cells of the at least one neighbour cell measurement.

3. The communication network device according to any one of the preceding claims, wherein the communication network device is configured to determine a communication network cell group by adding, to the communication network cell group, a communication network cell, which meets at least one of the following:
is present in a previously executed paging event history as a communication network cell in which at least one or a predetermined number of paging events to the user communication device succeeded;
represents a communication network cell, in which the user communication device is expected according to a history of mobility of the user communication device;
a distance from the communication network cell to a last cell, via which the user communication device was most recently reachable, is smaller than a predetermined maximum distance threshold, if the user communication device is a stationary device;
the distance from the communication network cell to the last cell is larger than a predetermined minimum distance threshold, if the user communication device is a non-stationary device;
overlaps with an estimated location of the user communication device.

4. The communication network device according to any one of the preceding claims, wherein the communication network device is configured to rank communication network cells of the communication network cell group.

5. The communication network device according to any one of the preceding claims, wherein the communication network device is configured to rank communication network cells of the communication network cell group according to at least one of the following:
the at least one neighbour cell measurement provided by the user communication device;
the previously executed paging event history;
the history of mobility of the user communication device;
the distance to the last cell;
a presence of an overlap with the estimated location of the user communication device.

6. The communication network device according to claim 4 or 5, wherein:
the at least one neighbour cell measurement comprises for each neighbour cell of the neighbour cell group at least one of the following:
a signal strength of signals of the user communication device in the corresponding neighbour cell, and/or
a measured signal quality of signals of the user communication device in the corresponding neighbour cell; and
the communication network device is configured to rank communication network cells of the communication network cell group according to one of the following:
the corresponding signal strength, and/or
the corresponding signal quality.

7. The communication device according to claim 6, wherein:
a communication network cell of the communication network cell group with a signal strength, which is higher than a further signal strength of a further communication network cell of the communication network cell group, receives a higher ranking than the further communication network cell; and/or
a communication network cell of the communication network cell group with a signal quality, which is higher than a further signal quality of a further communication network cell of the communication network cell group, receives a higher ranking than the further communication network cell.

8. The communication network device according to any one of claims 4 to 7, wherein the communication network device is configured to start the paging to the user communication device in a communication network cell of the communication network cell group, which has the highest ranking in the communication network cell group.

9. The communication network device according to claim 8, wherein, if the paging in the communication network cell of the communication network cell group fails, the communication network device is configured to continue the paging to the user communication device in a further communication network cell of the communication network cell group, which has the next lower ranking in the communication network cell group.

10. The communication network device according to any one of the preceding claims, wherein the communication network device is configured to receive the at least one neighbour cell measurement from the user communication device.

11. The communication network device according to any one of the preceding claims, wherein the communication network device is configured to determine a communication network cell group by selecting communication network cells from a cell cluster of the communication network and/or from a tracking area of the communication network, said tracking area comprising a plurality of communication network cells.

12. The communication network device according to any one of the preceding claims, wherein:
the paging is a radio access network based paging;
the communication network is a long-term evolution network or a communication network that is based on a long-term evolution network architecture; and/or
the communication network device is a base station or an evolved Node B.

13. A method, wherein the method comprises determining of a communication network cell group in a communication network for executing paging to a user communication device in a dormant state, wherein the communication network cell group is determined by use of at least one neighbour cell measurement provided by the user communication device in an active state.

14. A computer program product comprising computer readable program code that is configured to cause a computing device to execute steps of method of claim 13.

15. A computer-readable recording medium configured to store therein a computer program product, which comprises a computer readable program code that is configured to cause a computing device to execute steps of method of claim 13.

## Patentansprüche

1. Kommunikationsnetzvorrichtung, wobei die Kommunikationsnetzvorrichtung dazu ausgelegt ist, eine Kommunikationsnetzzellengruppe in einem Kommunikationsnetz zum Ausführen von Funkrufen an eine Benutzerkommunikationsvorrichtung in einem Ruhezustand zu bestimmen, wobei die Kommunikationsnetzzellengruppe durch Verwendung einer von der Benutzerkommunikationsvorrichtung in einem aktiven Zustand bereitgestellten Nachbarzellenmessung bestimmt wird.

2. Kommunikationsnetzvorrichtung nach Anspruch 1, wobei die Verwendung mindestens einer Nachbarzellenmessung das Hinzufügen von Nachbarzellen der mindestens einen Nachbarzellenmessung zu der Kommunikationsnetzzellengruppe umfasst.

3. Kommunikationsnetzvorrichtung nach einem der vorhergehenden Ansprüche, wobei die Kommunikationsnetzvorrichtung dazu ausgelegt ist, eine Kommunikationsnetzzellengruppe durch Hinzufügen einer Kommunikationsnetzzelle zu der Kommunikationsnetzzellengruppe zu bestimmen, die mindestens einen der folgenden Punkte erfüllt:
ist in einem zuvor ausgeführten Verlauf von Funkrufereignissen als eine Kommunikationsnetzzelle vorhanden, in der mindestens ein Funkrufereignis oder eine vorbestimmte Anzahl von Funkrufereignissen an die Benutzerkommunikationsvorrichtung erfolgreich war;
repräsentiert eine Kommunikationsnetzzelle, in der die Benutzerkommunikationsvorrichtung gemäß einem Verlauf der Mobilität der Benutzerkommunikationsvorrichtung erwartet wird;
eine Entfernung von der Kommunikationsnetzzelle zu einer letzten Zelle, über die die Benutzerkommunikationsvorrichtung zuletzt erreichbar war, kleiner ist als ein vorbestimmter maximaler Entfernungsschwellenwert, wenn die Benutzerkommunikationsvorrichtung eine stationäre Vorrichtung ist;
die Entfernung von der Kommunikationsnetzzelle zu der letzten Zelle größer ist als ein vorbestimmter minimaler Entfernungsschwellenwert, wenn die Benutzerkommunikationsvorrichtung eine nichtstationäre Vorrichtung ist;
überschneidet sich mit einer geschätzten Position der Benutzerkommunikationsvorrichtung.

4. Kommunikationsnetzvorrichtung nach einem der vorhergehenden Ansprüche, wobei die Kommunikationsnetzvorrichtung dazu ausgelegt ist, Kommunikationsnetzzellen der Kommunikationsnetzzellengruppe einzustufen.

5. Kommunikationsnetzvorrichtung nach einem der vorhergehenden Ansprüche, wobei die Kommunikationsnetzvorrichtung dazu ausgelegt ist, die Kommunikationsnetzzellen der Kommunikationsnetzzellengruppe gemäß mindestens einem der folgenden Punkte einzustufen:
die mindestens eine von der Benutzerkommunikationsvorrichtung bereitgestellte Nachbarzellenmessung;
den Verlauf der zuvor ausgeführten Funkrufereignisse;
der Verlauf der Mobilität der Benutzerkommunikationsvorrichtung;
die Entfernung zur letzten Zelle;
das Vorhandensein einer Überschneidung mit der geschätzten Position der Benutzerkommunikationsvorrichtung.

6. Kommunikationsnetzvorrichtung nach einem der Ansprüche 4 oder 5, wobei:
die mindestens eine Nachbarzellenmessung für jede Nachbarzelle der Nachbarzellengruppe mindestens einen der folgenden Punkte umfasst:
eine Signalstärke der Signale der Benutzerkommunikationsvorrichtung in der entsprechenden Nachbarzelle, und/oder
eine gemessene Signalqualität der Signale der Benutzerkommunikationsvorrichtung in der entsprechenden Nachbarzelle; und
die Kommunikationsnetzvorrichtung dazu ausgelegt ist, die Kommunikationsnetzzellen der Kommunikationsnetzzellengruppe nach einem der folgenden Punkte einzustufen:
der entsprechenden Signalstärke und/oder der entsprechenden Signalqualität.

7. Kommunikationsvorrichtung nach Anspruch 6, wobei:
eine Kommunikationsnetzzelle der Kommunikationsnetzzellengruppe mit einer Signalstärke,
die höher ist als eine weitere Signalstärke einer weiteren Kommunikationsnetzzelle der Kommunikationsnetzzellengruppe, einen höheren Rang als die weitere Kommunikationsnetzzelle empfängt; und/oder eine Kommunikationsnetzzelle der Kommunikationsnetzzellengruppe mit einer Signalqualität,
die höher ist als eine weitere Signalqualität einer weiteren Kommunikationsnetzzelle der Kommunikationsnetzzellengruppe, einen höheren Rang als die weitere Kommunikationsnetzzelle empfängt.

8. Kommunikationsnetzvorrichtung nach einem der Ansprüche 4 bis 7, wobei die Kommunikationsnetzvorrichtung dazu ausgelegt ist, den Funkruf an die Benutzerkommunikationsvorrichtung in einer Kommunikationsnetzzelle der Kommunikationsnetzzellengruppe zu starten, die den höchsten Rang in der Kommunikationsnetzzellengruppe hat.

9. Kommunikationsnetzvorrichtung nach Anspruch 8, wobei, wenn der Funkruf in der Kommunikationsnetzzelle der Kommunikationsnetzzellengruppe fehlschlägt, die Kommunikationsnetzvorrichtung dazu ausgelegt ist, den Funkruf an die Benutzerkommunikationsvorrichtung in einer weiteren Kommunikationsnetzzelle der Kommunikationsnetzzellengruppe fortzusetzen, die den nächstniedrigeren Rang in der Kommunikationsnetzzellengruppe hat.

10. Kommunikationsnetzvorrichtung nach einem der vorhergehenden Ansprüche, wobei die Kommunikationsnetzvorrichtung dazu ausgelegt ist, die mindestens eine Nachbarzellenmessung von der Benutzerkommunikationsvorrichtung zu empfangen.

11. Kommunikationsnetzvorrichtung nach einem der vorhergehenden Ansprüche, wobei die Kommunikationsnetzvorrichtung dazu ausgelegt ist, eine Kommunikationsnetzzellengruppe durch Auswählen von Kommunikationsnetzzellen aus einem Zellencluster des Kommunikationsnetzes und/oder aus einem Verfolgungsbereich des Kommunikationsnetzes zu bestimmen, wobei der Verfolgungsbereich eine Mehrzahl von Kommunikationsnetzzellen umfasst.

12. Kommunikationsnetzvorrichtung nach einem der vorhergehenden Ansprüche, wobei:
der Funkruf ein auf einem Funkzugangsnetz basierender Funkruf ist;
das Kommunikationsnetz, Long Term Evolution-Netz oder ein auf einer Long Term Evolution-Netzarchitektur basierendes Kommunikationsnetz ist; und/oder die Kommunikationsnetzvorrichtung eine Basisstation oder ein evolved Node B ist.

13. Verfahren, wobei das Verfahren das Bestimmen einer Kommunikationsnetzzellengruppe in einem Kommunikationsnetz zum Ausführen von Funkrufen an eine Benutzerkommunikationsvorrichtung in einem Ruhezustand umfasst, wobei die Kommunikationsnetzzellengruppe unter Verwendung von mindestens einer Nachbarzellenmessung bestimmt wird, die von der Benutzerkommunikationsvorrichtung in einem aktiven Zustand bereitgestellt wird.

14. Computerprogrammprodukt, das computerlesbaren Programmcode umfasst, der dazu ausgelegt ist, eine Rechenvorrichtung zu veranlassen, Schritte des Verfahrens nach Anspruch 13 auszuführen.

15. Computerlesbares Aufzeichnungsmedium, das dazu ausgelegt ist, darin ein Computerprogrammprodukt zu speichern, das einen computerlesbaren Programmcode umfasst, der dazu ausgelegt ist, eine Rechenvorrichtung zu veranlassen, Schritte des Verfahrens nach Anspruch 13 auszuführen.

## Revendications

1. Dispositif de réseau de communication, dans lequel le dispositif de réseau de communication est configuré pour déterminer un groupe de cellules de réseau de communication dans un réseau de communication pour exécuter une recherche de personnes vers un dispositif de communication d'utilisateur dans un état dormant, où le groupe de cellules de réseau de communication est déterminé en utilisant une mesure de cellule voisine fournie par le dispositif de communication d'utilisateur dans un état actif.

2. Dispositif de réseau de communication selon la revendication 1, dans lequel l'utilisation d'au moins une mesure de cellule voisine comprend l'ajout, au groupe de cellules de réseau de communication, de cellules voisines de l'au moins une mesure de cellule voisine.

3. Dispositif de réseau de communication selon l'une quelconque des revendications précédentes, dans lequel le dispositif de réseau de communication est configuré pour déterminer un groupe de cellules de réseau de communication en ajoutant, au groupe de cellules de réseau de communication, une cellule de réseau de communication, qui satisfait au moins l'un des critères suivants :
la cellule est présente dans un historique d'événements de recherche de personnes exécutés précédemment en tant que cellule de réseau de communication dans laquelle au moins un ou un nombre prédéterminé d'événements de recherche de personnes vers le dispositif de communication d'utilisateur a réussi ;
la cellule représente une cellule de réseau de communication, où le dispositif de communication d'utilisateur est attendu selon un historique de la mobilité du dispositif de communication d'utilisateur ;
la distance entre la cellule du réseau de communication et une dernière cellule, par laquelle le dispositif de communication utilisateur a pu être atteint le plus récemment, est inférieure à un seuil de distance maximum prédéterminé, si le dispositif de communication utilisateur est un dispositif stationnaire ;
la distance entre la cellule du réseau de communication et la dernière cellule est supérieure à un seuil de distance minimum prédéterminé, si le dispositif de communication utilisateur est un dispositif non stationnaire ;
la cellule chevauche un emplacement estimé du dispositif de communication d'utilisateur.

4. Dispositif de réseau de communication selon l'une quelconque des revendications précédentes, dans lequel le dispositif de réseau de communication est configuré pour classer les cellules de réseau de communication du groupe de cellules de réseau de communication.

5. Dispositif de réseau de communication selon l'une quelconque des revendications précédentes, dans lequel le dispositif de réseau de communication est configuré pour classer les cellules de réseau de communication du groupe de cellules de réseau de communication en fonction d'au moins un des éléments suivants :
l'au moins une mesure de cellule voisine fournie par le dispositif de communication d'utilisateur ;
l'historique des événements de recherche de personnes exécutés précédemment ;
l'historique de la mobilité du dispositif de communication d'utilisateur ;
la distance jusqu'à la dernière cellule ;
la présence d'un chevauchement avec l'emplacement estimé du dispositif de communication d'utilisateur.

6. Dispositif de réseau de communication selon la revendication 4 ou la revendication 5, dans lequel :
l'au moins une mesure de cellule voisine comprend, pour chaque cellule voisine du groupe de cellules voisines, au moins l'un des éléments suivants :
une intensité de signal des signaux du dispositif de communication d'utilisateur dans la cellule voisine correspondante, et/ou
une qualité de signal mesurée des signaux du dispositif de communication d'utilisateur dans la cellule voisine correspondante ; et
le dispositif de réseau de communication est configuré pour classer les cellules de réseau de communication du groupe de cellules de réseau de communication en fonction de l'un des éléments suivants :
l'intensité du signal correspondant, et/ou la qualité du signal correspondant.

7. Dispositif de communication selon la revendication 6, dans lequel :
une cellule de réseau de communication du groupe de cellules de réseau de communication avec une intensité de signal, qui est supérieure à une autre intensité de signal d'une autre cellule de réseau de communication du groupe de cellules de réseau de communication, reçoit un classement plus élevé que l'autre cellule de réseau de communication ; et/ou
une cellule de réseau de communication du groupe de cellules de réseau de communication avec une qualité de signal, qui est supérieure à une autre qualité de signal d'une autre cellule de réseau de communication du groupe de cellules de réseau de communication, reçoit un classement plus élevé que l'autre cellule de réseau de communication.

8. Dispositif de réseau de communication selon l'une quelconque des revendications 4 à 7, dans lequel le dispositif de réseau de communication est configuré pour commencer la recherche de personnes vers le dispositif de communication d'utilisateur dans une cellule de réseau de communication du groupe de cellules de réseau de communication, qui a le classement le plus élevé dans le groupe de cellules de réseau de communication.

9. Dispositif de réseau de communication selon la revendication 8, dans lequel, si la recherche de personnes dans la cellule de réseau de communication du groupe de cellules de réseau de communication échoue, le dispositif de réseau de communication est configuré pour continuer la recherche de personnes vers le dispositif de communication d'utilisateur dans une autre cellule de réseau de communication du groupe de cellules de réseau de communication, qui a le classement inférieur suivant dans le groupe de cellules de réseau de communication.

10. Dispositif de réseau de communication selon l'une quelconque des revendications précédentes, dans lequel le dispositif de réseau de communication est configuré pour recevoir l'au moins une mesure de cellule voisine du dispositif de communication d'utilisateur.

11. Dispositif de réseau de communication selon l'une quelconque des revendications précédentes, dans lequel le dispositif de réseau de communication est configuré pour déterminer un groupe de cellules de réseau de communication en sélectionnant des cellules de réseau de communication à partir d'un groupe de cellules du réseau de communication et/ou d'une zone de suivi du réseau de communication, ladite zone de suivi comprenant une pluralité de cellules de réseau de communication.

12. Dispositif de réseau de communication selon l'une quelconque des revendications précédentes, dans lequel :
la recherche de personnes est une recherche de personnes basée sur un réseau d'accès radio ;
le réseau de communication est un réseau à évolution à long terme ou un réseau de communication qui est basé sur une architecture de réseau à évolution à long terme ;
et/ou
le dispositif de réseau de communication est une station de base ou un nœud B évolué.

13. Procédé, où le procédé comprend de déterminer un groupe de cellules de réseau de communication dans un réseau de communication pour exécuter une recherche de personnes vers un dispositif de communication d'utilisateur dans un état dormant, où le groupe de cellules de réseau de communication est déterminé en utilisant au moins une mesure de cellule voisine fournie par le dispositif de communication d'utilisateur dans un état actif.

14. Produit programme informatique comprenant un code de programme lisible par ordinateur qui est configuré pour amener un dispositif informatique à exécuter les étapes du procédé de la revendication 13.

15. Support d'enregistrement lisible par ordinateur configuré pour stocker un produit programme informatique qui comprend un code de programme lisible par ordinateur, qui est configuré pour amener un dispositif informatique à exécuter les étapes du procédé de la revendication 13.
